(19) Europäisches Patentamt
European Patent Office
Office européen des brevets

(11) Veröffentlichungsnummer: **0 101 864**
**B1**

(12) # EUROPÄISCHE PATENTSCHRIFT

(45) Veröffentlichungstag der Patentschrift: **29.04.87**

(51) Int. Cl.[4]: **C 08 G 63/52**, H 01 B 3/42

(21) Anmeldenummer: **83106908.3**

(22) Anmeldetag: **14.07.83**

(54) **Ungesättigte, homo- und/oder copolymerisierbare Polyester, Verfahren zu ihrer Herstellung und ihre Verwendung.**

(30) Priorität: **09.08.82 DE 3229639**

(43) Veröffentlichungstag der Anmeldung: **07.03.84 Patentblatt 84/10**

(45) Bekanntmachung des Hinweises auf die Patenterteilung: **29.04.87 Patentblatt 87/18**

(84) Benannte Vertragsstaaten: **AT BE CH DE FR GB IT LI NL SE**

(56) Entgegenhaltungen:
**DE-A-1 961 241**
**US-A-3 454 673**

**CHEMICAL ABSTRACTS, Band 82, Nr. 16, 21. April 1975, Seite 68, Nr. 99276x, Columbus, Ohio, USA**
**CHEMICAL ABSTRACTS, Band 81, Nr. 22, 2. Dezember 1974, Seite 28, Nr. 136971x, Columbus, Ohio, USA**

(73) Patentinhaber: **BASF Lacke + Farben Aktiengesellschaft, Max- Winkelmann- Strasse 80, D-4400 Münster (DE)**

(72) Erfinder: **Hegemann, Günther, Dr. Dipl.- Chem., Andreasstrasse 23, D-2000 Hamburg 60 (DE)**
Erfinder: **Miedeck, Karin, Stubbenberg 24, D-2100 Hamburg 90 (DE)**

(74) Vertreter: **Habbel, Hans- Georg, Dipl.- Ing., Postfach 3429 Am Kanonengraben 11, D-4400 Münster (DE)**

**EP 0 101 864 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ungesättigte, homo- und/oder copolymerisierbare Polyester, hergestellt aus mindestens teilweise mehrwertigen Alkoholen und mindestens teilweise mehrwertigen Carbonsäuren und gegebenenfalls Hydroxycarbonsäuren bzw. deren zur Esterbildung befähigten Derivaten unter Mitverwendung von Maleinsäure, Fumarsäure, Itaconsäure, Mesaconsäure und/oder Aconitsäure bzw. deren zur Esterbildung befähigten Derivaten, wobei als ein Teil der Alkohole hydroxyliertes Polybutadien in den Polyester einkondensiert ist, ein Verfahren zur Herstellung der Polyester und ihre Verwendung.

Die Klasse der homo- und/oder copolymerisierbaren ungesättigten Polyester, ihre Herstellung und inre Verarbeitung sind bekannt. So können ungesättigte Polyesterharze durch Copolyveresterung von ein- und/oder mehrwertigen Alkoholen mit ein- und/oder mehrwertigen Carbonsäuren und/oder gegebenenfalls Hydroxycarbonsäuren mit alkoholischen Hydroxylgruppen oder auch unter Verwendung bzw. Mitverwendung deren zur Esterbildung befähigten Derivate hergestellt werden. Dabei wird wenigstens eine Verbindung, die olefinisch ungesättigt und nomo - oder copolymerisierbar ist, in das Polyesterharz einkondensiert, wobei die Durchschnittsfunktionalität und das Verhältnis von Hydroxyl- zu Carboxylgruppen nach den bekannten Regeln aus dem Stand der Technik so gewählt werden müssen, daß die Bildung von Polyestern gewährleistet ist. Diese Harze lassen sich dann insbesondere nach Zusatz von radikalliefernden Verbindungen und gegebenenfalls nach Zusatz von olefinisch ungesättigten copolymerisierbaren monomeren Verbindungen auch in dicken Schichten zu Duroplasten härten.

Diese bekannten Polyester werden insbesondere in Form ihrer Lösungen in copolymerisierbaren Vinyl- und/oder Allylmonomeren als Gießharze zum Imprägnieren von elektrischen Maschinen oder Teilen hiervon verwendet. Mit ihnen werden z.B. Statoren von Elektromotoren oder Transformatoren nach verschiedenen Tränkverfahren wie Tauchen oder Träufeln imprägniert. Weiterhin können mit ihnen elektrische oder elektronische Bauteile oder vollständige Schaltungen oberflächlich beschichtet werden.

Aus der US-PS 3,454,675 ist die Modifizierung ungesättigter Polyester, die löslich sind in und polymerisierbar sind mit ungesättigten Monomeren, mit einbasischen Carbonsäuren und/oder monofunktionellen Hydroxylverbindungen, welche fünf- oder sechsgliedrige Imidringe enthalten, bekannt. Desweiteren wird in dieser Druckschrift auf die Verwendung derartiger ungesättigter Polyester in copolymerisierbaren Vinylmonomeren zum Isolieren elektrischer Bauelemente hingewiesen.

Nach dem Tauchen der Maschinen oder der Bauteile werden diese durch eine Abdunst- und Abtropfzone geführt, dann wird das anhaftende Polyesterharz in einem Ofen gehärtet. Bei diesem Verfahren treten also zunächst Abtropfverluste in der Abtropfzone auf. Wenn auch das hier anfallende Harz wieder in den Tauchbehälter zurückgeführt werden kann, ergibt sich doch der Nachteil, daß das Abtropfen zu einer unvollständigen Imprägnierung führt.

Weiterhin treten vor der Aushärtung zusätzliche Abtropfverluste im Ofen auf, wenn die Viskosität der Gießharze durch die Temperaturerhöhung sinkt. Dies ist besonders nachteilig, da das im Ofen abtropfende Material aushärtet und nicht nur nicht mehr verwendet werden kann, sondern zu einer erheblichen Verunreinigung des Ofens führt.

Ein weiteres Problem, das sich aus dem Abtropfen bzw. dem Ablaufen der verwendeten Gießharze ergibt, ist das Auftreten von ungleichmäßigen, von oben nach unten zunehmenden Schichtdicken und die Ausbildung von Wulsten am unteren Rand von beschichteten Bauteilen.

Zur Vermeidung dieser Nachteile ist es bekannt, durch Zusatz von Fließanomalien erzeugenden Substanzen zu den Gießharzen Strukturviskosität bzw. Thixotropie in diesen zu erzeugen. Hierzu werden üblicherweise Substanzen, wie pyrogene Kieselsäure, Asbestfasern, Quarzmehl, Mikrodolomit oder auch flüssige Komponenten wie Rizinusölderivate, Acrylharze oder Silikonharze verwendet. Die Verwendung dieser Zusatzstoffe ist mit einigen Nachteilen verbunden. So ergeben die anorganischen Komponenten keine klaren Lösungen, und ihre Einarbeitung in die Polyesterharze ist nicht immer einfach. Die obengenannten flüssigen Komponenten liegen nachteilig als Weichmacher in den Harzen vor. Weiterhin kann es bei Verwendung der genannten Zusatzstoffe zu einer Hautbildung der Gießharze kommen.

Aus dem gattungsbildenden Chemical Abstracts Referat Nr. 99 276 x, Band 82, Nr. 16, 21.04.1975, S. 68, Columbus, Ohio, USA (JP-A-74 26 950, Nippon Soda Co., Ltd) ist die Herstellung ungesättigter copolymerisierbarer Polyester aus mehrwertigen Alkoholen und mehrwertigen Carbonsäuren, wobei im Beispiel Maleinsäureanhydrid eingesetzt wird, sowie unter Mitverwendung von OH- oder COOH-Gruppen enthaltendem Polybutadien mit einem Molekulargewicht von 200 bis 20 000 bekannt. In dem Beispiel des CA-Referates wird ein Polybutadiendiol mit einem mittleren Molekulargewicht von 1 320 und einer OH-Zahl von 71,5 eingesetzt. Aus dem genannten Wert für die OH-Zahl und für das mittlere Molekulargewicht des Polybutadiens ist eine Hydroxyfunktionalität von etwa 1,7 berechenbar.

Es ist Aufgabe der Erfindung, die zuvor beschriebenen Nachteile des Standes der Technik zu vermeiden und Polyester zu schaffen, die aufgrund ihres molekularen Aufbaus Fließanomalien aufweisen und strukturviskoses bzw. thixotropes Verhalten ohne den Zusatz von Hilfsmitteln zeigen.

Überraschenderweise wurde nun gefunden, daß diese Aufgabe gelöst werden kann durch den Einbau von langkettigen Alkoholen in die Polyester, wobei diese langkettigen Alkohole einen Teil der üblichen niedermolekularen Alkohole ersetzen.

Gegenstand der Erfindung sind also ungesättigte, homo- und /oder copolymerisierbare Polyester der eingangs genannten Art, die dadurch gekennzeichnet sind, daß das hydroxylierte Polybutadien ein mittleres

Molekulargewicht von 2400 - 3000 und eine Hydroxyfunktionalität von 2,2 - 2,4 hat. (Diese Werte entsprechen Hydroxylzahlen von 41 bis 56 mg KOH/g).

Durch das Einkondensieren des durch die Hydroxyfunktionalität und das mittlere Molekulargewicht charakterisierten hydroxylierten Polybutadiens in den Polyester werden die gewünschten Fließanomalien und das strukturviskose bzw. thixotrope Verhalten des ungesättigten Polyesters erzielt. Für das Erreichen der gewünschten Fließanomalie und der Strukturviskosität ist der Einbau von langkettigen Alkoholen in den Polyester entscheidend. Durch die erfindungsgemäßen ungesättigten Polyester, die ein ganz bestimmtes Polybutadien einkondensiert enthalten, werden die gewünschten Eigenschaften in bezug auf die Strukturviskosität, die Thixotropie und die Fließanomalie erzielt.

Im Beispiel des gattungsbildenden CA-Referates wird ein hydroxyliertes Polybutadien eingebaut, welches eine höhere Hydroxylzahl hat als das der vorliegenden Erfindung. Folglich sind die eingebauten Alkoholketten bei dem gemäß dem CA-Referat hergestellten Polyester kürzer als bei dem erfindungsgemäßen Polyester. Daraus folgt, daß der gemäß dem Beispiel des CA-Referates dargestellte ungesättigte Polyester nicht die erfindungsgemäß erzielten guten Eigenschaften hinsichtlich der Fließanomalien und der Strukturviskosität hat. Aus der aus dem Beispiel des CA-Referates berechenbaren Hydroxyfunktionalität, also der mittleren Anzahl von Hydroxylgruppen pro Molekül, von 1,7 ergibt sich im Unterschied zu der erfindungsgemäßen Hydroxyfunktionalität von 2,2 bis 2,4 der Nachteil, daß ein erheblicher Anteil des eingesetzten Polybutadiens monofunktionell ist und zum Kettenabbruch der Polykondensation führt.

Vorteilhaft beträgt der Anteil an hydroxyliertem Polybutadien 1 - 10 Mol-% bezogen auf die Gesamtmenge an Alkoholen. Die so modifizierten Polyester zeigen strukturviskoses bzw. thixotropes Verhalten ohne den Zusatz der bisher üblicherweise zur Erzielung der genannten Fließanomalien verwendeten Substanzen. Bei einem Gehalt an hydroxyliertem Polybutadien von weniger als einem Prozent ist die Wirkung der Modifizierung zu gering, und bei einem Gehalt von mehr als 10 % besteht die Gefahr des Gelierens.

Aus dem großen Bereich des bekannten Wissens über die Herstellung von ungesättigten Polyestern seien im folgenden eine Reihe von ein- und mehrfunktionellen Reaktanten genannt, die im Rahmen der Erfindung eingesetzt werden können. Als Alkohole können z.B. verwendet werden: Alkanole wie Methanol, Ethanol, Propanol, Isopropanol, Cyclohexanol, Tetrahydrobenzylalkohol, Tricyclodecanol, Benzylalkohol u.a., Glykol Propandiole, Butandiole, Hexandiole, Trimethylhexandiol, Cyclohexandimethanol, 1,1-bis Hydroxymethylcyclohexan-3, Tricyclodecandiol, Tricyclodecanmonoglycerinäther u.a.

Als Carbonsäuren können in Betracht kommen Laurinsäure, Oleinsäure, Benzoesäure, Abietinsäure und anderes Monocarbonsäuren, als mehrwertige Verbindungen Bernsteinsäure, Adipinsäure, Ortho-, Iso- und Terepthalsäure, Tetrahydrophthalsäure, Hexahydrophthalsäure, Hexachlorendomethylentetrahydrophthalsäure, Tetrachlorphthalsäure, Tetrabromphthalsäure, Trimellithsäure, Pyromellithsäure und andere nach dem Stand der Technik zur Herstellung von ungesättigten Polyestern zu verwendende Carbonsäuren.

Übliche homo- oder copolymerisierbare olefinisch ungesättigte Verbindungen, die zur Herstellung von ungesättigten Polyestern verwendet und auch im Rahmen der Erfindung eingesetzt werden, sind Maleinsäure, Fumarsäure, Itaconsäure, Mesaconsäure und Aconitsäure.

Anstelle der freien Alkohole oder Säuren können in bekannter Weise auch deren funktionelle Derivate wie Ester, Anhydride, Chloride verwendet werden.

Erfindungswesentlich ist es nun, daß ein Teil der üblicherweise zur Herstellung von ungesättigten Polyestern verwendeten Alkohole durch ein hydroxyliertes Polybutadien mit einem mittleren Molekulargewicht von 2400 bis 3000 und einer Hydroxyfunktionalität von 2,2 bis 2,4 ersetzt wird. Bei einem bekannten, handelsüblichen Produkt dieser Art handelt es sich um flüssiges Polybutadien mit endständigen, primären Hydroxylgruppen, die zu 95 % allylisch angeordnet sind. Die Mikrostruktur dieses Polybutadiens wurde wie folgt ermittelt: 60 % 1,4-Trans-, 20 % 1,4-Cis- und 20 % Vinylkonfiguration.

Zur Erhöhung der thermischen Dauerbelastbarkeit der erfindungsgemäßen ungesättigten Polyester im gehärteten Zustand sind die Polyester vorteilhaft mit stickstoffhaltigen Verbindungen der allgemeinen Formeln

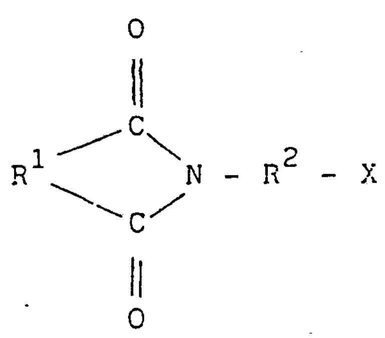

oder

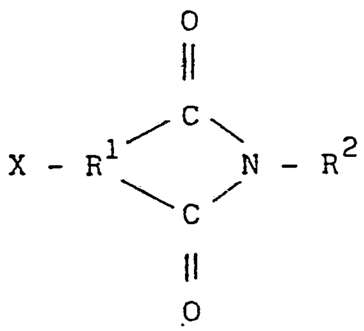

modifiziert, in denen $R^1$ einen aliphatiachen Rest, an dem die beiden zur Anhydridbildung befähigten Carboxylreste in 1,2- oder 1,3-Stellung stehen, $R^2$ einen Alkyl- oder Arylrest und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di- oder Triisocyanaten erfolgt sein kann.

Als ein einfacher Vertreter dieser stickstoffhaltigen Verbindungen, die durch den stets vorhandenen Imidring I besonders gekennzeichnet ist und als Endgruppe verwendet werden kann, sei hier die folgende, aus Phthalsäureanhydrid und Monoäthanolamin leicht herstellbare Verbindung (a) genannt:

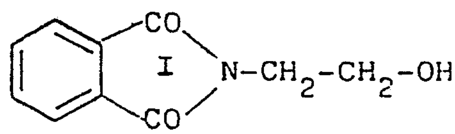
(a)

Abänderungen dieses einfachen Modells sind leicht dadurch zu erreichen, daß man an Stelle des einfichen Phthalsäureanhydrids substituierte, teilweise hydrierte oder komplizierter gebaute Abkömmlinge der o-Phthalsäure wählt, beispielsweise halogenierte Phthalsäureanhydride (Tetrachlor- oder Tetrabromphthalsäureanhydrid), alkylierte oder hydrierte Systeme (Methyl-, Tetrahydro-, Hexahydro-, Methylhexahydro-, Endomethylentetrahydrophthalsäureanhydrid). Zu einer ganz inderen Gestaltung des Ringes I kommt man, wenn man Verbindungen wie Malein- oder Citraconsäure, Bernsteinsäure bzw. Derivate und alkylierte Abkömmlinge oder die Anlagerungsprodukte von Malein- bzw. Citraconsäure an Dicyclopentadien, ungesättigte Ketone oder Diolefine wählt. Es dürfen aber auch Verbindungen wie z.B. Trimellithsäureanhydrid verwendet werden. Diese Säure ergibt, mit einem passenden Amin umgesetzt z.B. mit Monobutylamin, einen Baustein, bei welchem der Rest X durch den am aromatischen Ring sitzenden Carboxylrest vertreten ist.

Ebenso gehören auch Verbindungen wie 1,8-Naphthalsäure oder Naphthalin-1,2-dicarbonsäure in Form ihrer Anhydride hierher (c, d), und weitere Formelbilder (e bis g) zeigen weitere Variationsmöglichkeiten. Andererseits läßt sich das einfache Athanolamin durch die verschiedensten Aminoverbindungen ersetzen, beispielsweise durch die isomeren Propinol- oder Butanolamine oder andere höhere Homologe, durch im Kern aminierte Phenylätheralkohole oder Aminocarbonsäuren oder durch im Kern aminierte Äthoxylierungsprodukte von Phenolen.

Hierher gehören auch die nachstehend formulierten Umsetzungsprodukte des Trimellithsäureanhydrids, die sämtlich der oben skizzierten allgemeinen Formulierung eines Carbonsäureimidsystems, verbunden mit einer noch aktiven monofunktionellen Gruppierung, entsprechen.

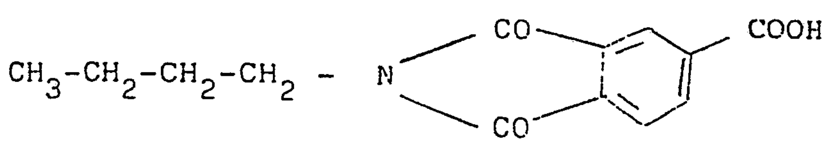
(b)

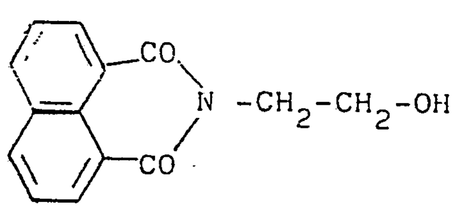
(c)

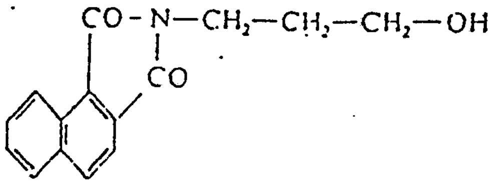

(d)

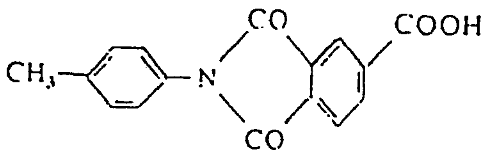

(e)

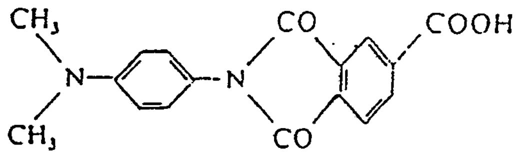

(f)

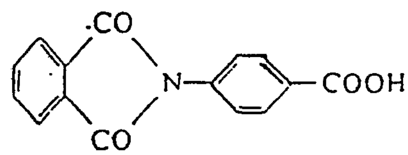

(g)

Diese oder ähnliche Verbindungen deren Herstellung hier nicht unter Schutz gestellt werden soll, lassen sich in an sich bekannter Weise durch Erhitzen oder auch nur durch mäßiges Erwärmen der Komponenten in Lösung oder Schmelze gewinnen und in vielen Fällen als gut kristallisierte Verbindungen isolieren. Man kann aber auch ohne Isolation der Produkte so verfahren, daß man entweder das in Schmelze oder Lösung vorgefertigte Produkt wie eine gewöhnliche monofunktionelle Verbindung in den bekannten Aufbau eines ungesättigten Polyesters durch Zumischen der weiteren Rohstoffe und deren gemeinsames Erhitzen mit einbezieht oder indem man mit einem bereits weitgehend vorgefertigten, noch freie OH- oder COOH-Gruppen enthaltenden ungesättigten Polyester den Imidbaustein schmelzkondensiert und ihn sofort anschließend mit den vorbereiteten ungesättigten Polyester zum Endprodukt kondensiert. In jedem Falle sind natürlich die Beständigkeitsgrenzen und sonstige Eigenschaften des Imidbausteins zu berücksichtigen.

Sehr glatt erfolgt eine solche Anfügung von Endgruppen über Di- oder Triisocyanate, wobei entweder der vorgefertigte Hydroxylpolyester mit überschüssigem Isocyanat umgesetzt wird

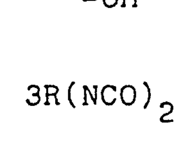


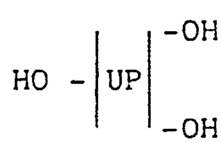

$OCN\text{-}R\text{-}NH\text{-}CO\text{-}O\text{-}[UP]\text{-}(O\text{-}CO\text{-}NH\text{-}R\text{-}NCO)_2$

UP = ungesättigter Polyester

worauf an den noch aktiven NCO-Gruppen Umsetzung mit einem Hydroxyl-Imidbaustein erfolgen kann, oder

man setzt zunächst ein Hydroxyl-Imidsystem mit überschüssigem Diisocyanat um und bringt dieses Produkt mit einem Hydroxylpolyester zur Reaktion:

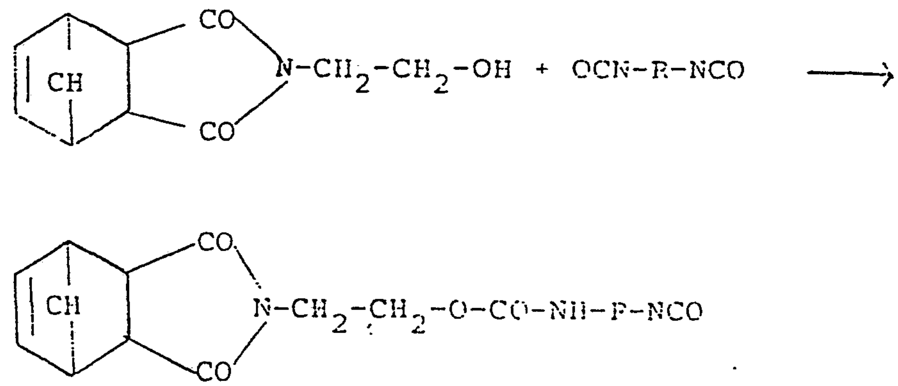

Diese recht unterschiedlich gebauten Imidbausteine sind als monofunktionelle Endgruppe bestimmend für die Kettenlänge, das Molekulargewicht, die Molekülgestalt und damit für die technisch wichtige Viskosität.

Neben diesen monofunktionellen Imidbausteinen können Imidreste auch über difunktionelle Bausteine in den Polyester eingebaut werden. Vorteilhaft sind dazu in die Polyester Reste einer Dicarbonsäure, eines Dialkohols und/oder einer Hydroxycarbonsäure mit jeweils wenigstens einer fünfgliedrigen cyclischen Imidgruppe einkondensiert. Die bei der Polyesterherstellung zu verwendenden, eine oder mehrere 5-gliedrige cyclische Imidgruppen enthaltenden Verbindungen müssen zwei funktionelle Gruppen enthalten, die in die Bildungsreaktion des ungesättigten Polyesterharzes eingreifen. In Betracht kommen hier zweiwertige Alkohole, zweiwertige Carbonsäuren und/oder Hydroxycarbonsäuren bzw deren zur Esterbildung befähigten Derivate. Sie enthalten in ihrem Molekül wenigstens einen 5-gliedrigen Imidring. In einer besonders wichtigen Ausführungsform der Erfindung sind dabei die Imidringe im Molekül so angeordnet, daß die in die Polyesterharzbildung eingreifenden funktionellen Gruppen über verschiedene Ringglieder der Imidringe hinweg miteinander in Verbindung stehen. Entsprechende Dicarbonsäuren und Dialkohole bzw. Hydroxycarbonsäuren sind an sich bekannt, und zwar unsbesondere aus dem Stand der Technik, der sich mit der Herstellung von gesättigten, Imidringe enthaltenden Polyesterharzen beschäftigt. Hingewiesen sei hier z.B. auf die britische Patentschrift 9 73 377 oder die französische Patentschrift 13 68 741. Sie können nach bekannten Verfahren, z.B. aus primäre Aminogruppen enthaltenden Verbindungen mit zur Bildung von cyclischen Imidgruppen befähigten, wenigstens zwei Carboxylgruppen enthaltenden Verbindungen hergestellt werden mit der Maßgabe, daß die zur Bildung eines imidgruppenhaltigen Moleküls verwendeten Ausgangsmoleküle zusammen noch zwei zur Esterbildung befähigte Gruppen enthalten, die nicht zur Imidbildung benötigt werden.

Die Imidgruppen enthaltenden Verbindungen können getrennt hergestellt werden und dann dem zur Polyesterherstellung verwendeten Reaktionsgemisch zugesetzt werden oder auch unmittelbar im Reaktionsgemisch aus ihren Ausgangsstoffen in Gegenwart weiterer Komponenten des Polyesterharzes gebildet werden, wie es für gesättigte Polyesterharze, beispielsweise in den genannten Patentschriften GB-PS 9 73 377 oder FR-PS 13 68 741 beschrieben ist. In diesem letzten Fall ist jedoch darauf zu achten, daß die ungesättigten Polyesterkomponenten, insbesondere ungesättigte Polycarbonsäuren, erst nach einer ausreichenden, vorzugsweise vollständigen Bildung von Imidringen dem Reaktionsgemisch zugesetzt werden, um unerwünschte Nebenreaktionen auszuschließen. Zur Esterbildung befähigte Gruppen sind primäre oder sekundäre alkoholische Hydroxylgruppen und Carboxylgruppen sowie davon abgeleitete Gruppierungen wie Anhydride, Halogenide, Ester, Epoxide.

Beispiele für die erfindungsgemäß zu verwendenden Verbindungen sind Stoffe der folgenden Formeln, die aus den in der 2. und 3. Spalte der nachfolgenden Tabelle aufgeführten Ausgangsstoffen hergestellt werden können:

1) 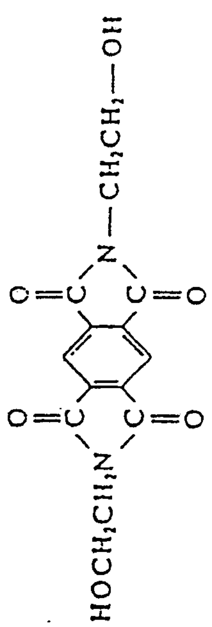 $H_2N—CH_2—CH_2—OH$ 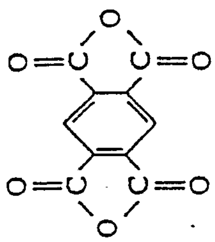 (PMA)

2) 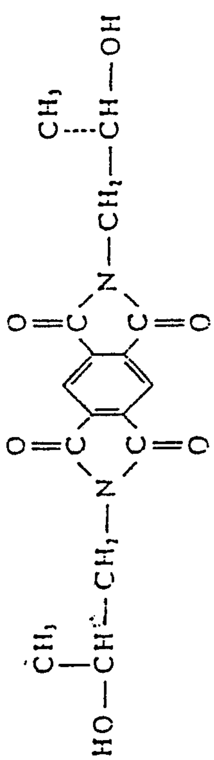 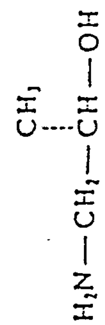 PMA

3) 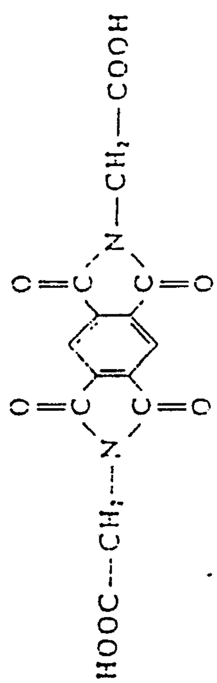 $H_2N—CH_2—COOH$ PMA

4) 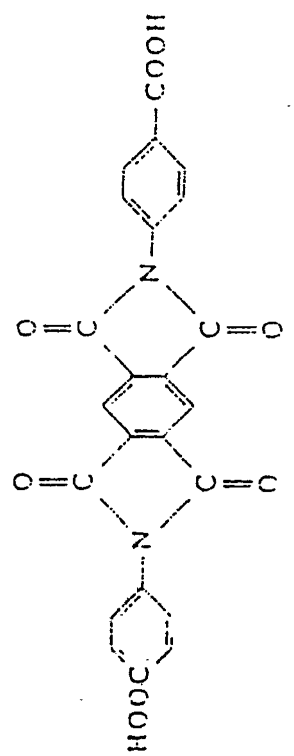 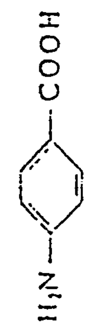 PMA

5) 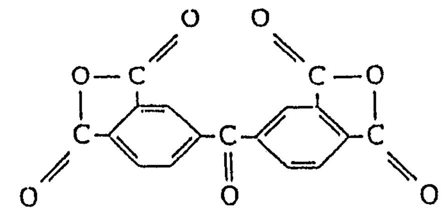

$H_2N—CH_2—CH_2—OH$

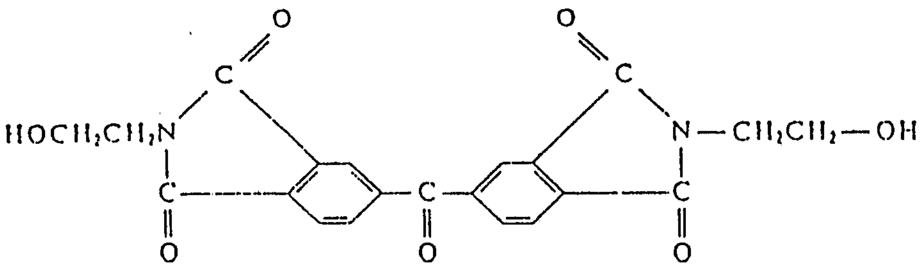

6) 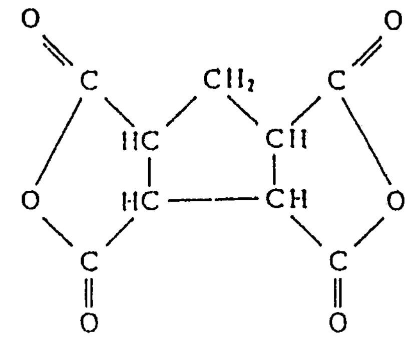

$H_2N—CH_2—CH_2—OH$

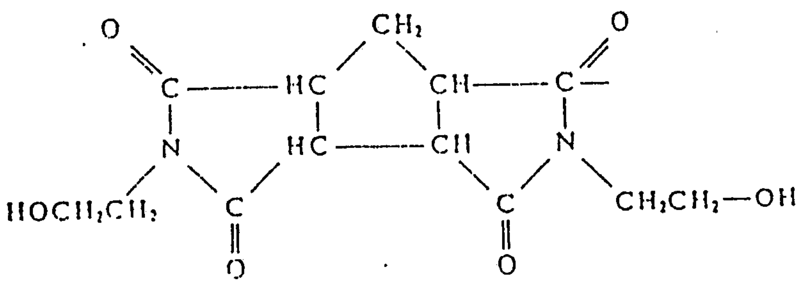

7) 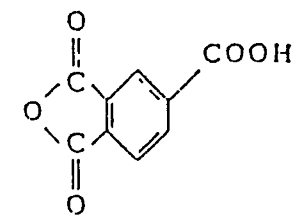 (TMA)

$H_2N—CH_2—CH_2—NH_2$

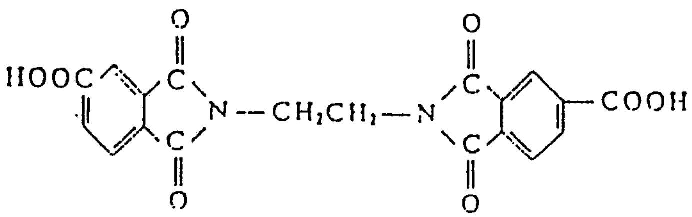

8) TMA

$H_2N—(CH_2)_6—NH_2$

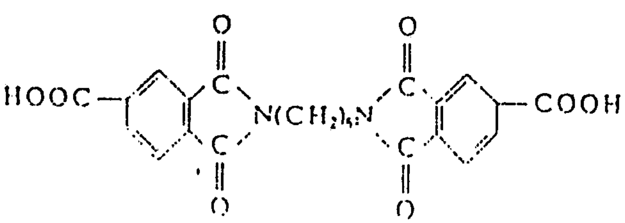

9) 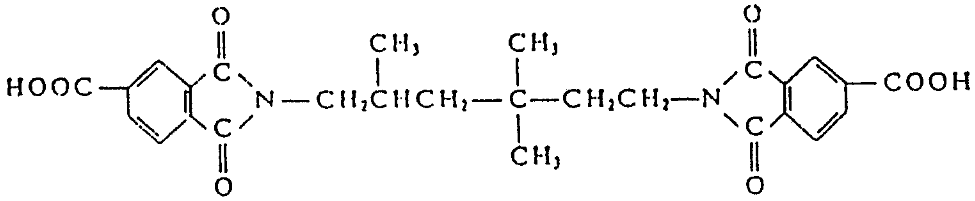 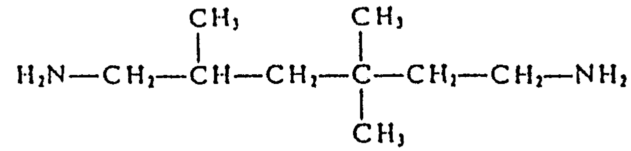 TMA

10) 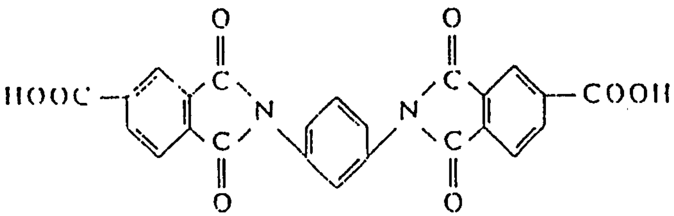 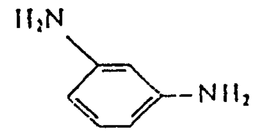 TMA

11) 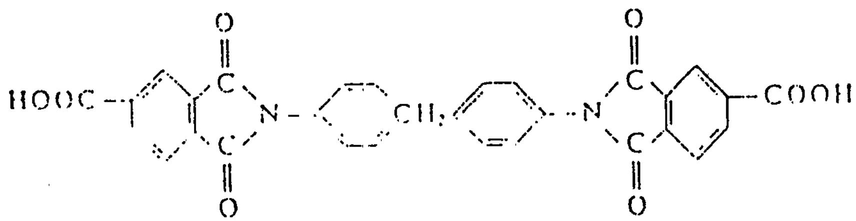 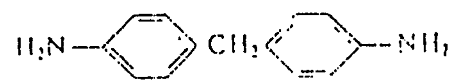 TMA

12) 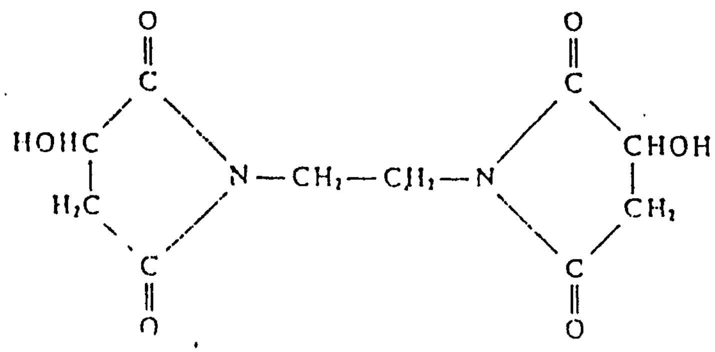 $H_2N—CH_2—CH_2—NH_2$ 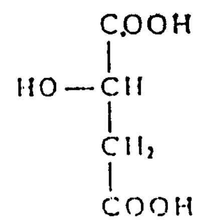

13) 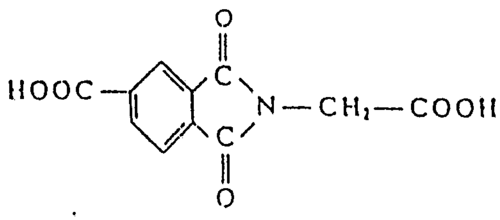 $H_2N—CH_2—COOH$ TMA

14) 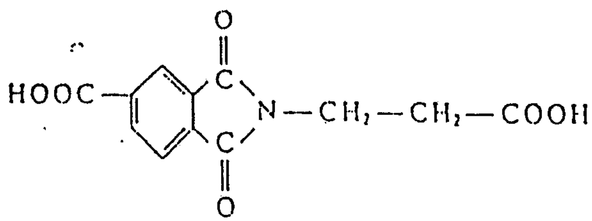 $H_2N—CH_2—CH_2—COOH$ TMA

15) 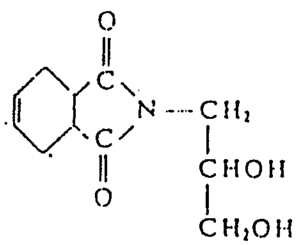 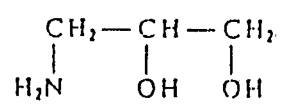 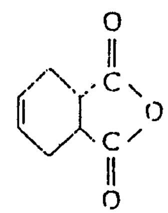

16) 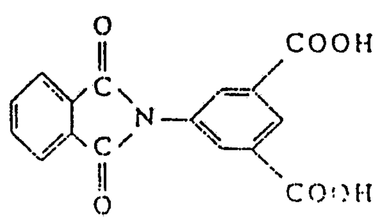 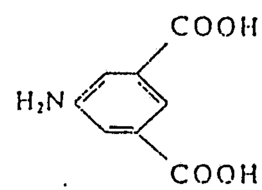 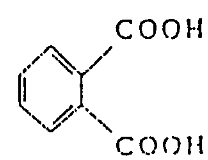

Aus den aufgezählten Verbindungen 1 - 15 ist ersichtlich, daß sich z.B. Reaktionsprodukte aus

1) Tetracarbonsäuren und Aminoalkoholen,
2) Tetracarbonsäuren und Aminocarbonsäuren,
3) Tricarbonsäuren und Aminoalkoholen,
4) Tricarbonsäuren und Aminocarbonsäuren,
5) Tricarbonsäuren und prim. Diaminen,
6) Hydroxydicarbonsäuren und Aminoalkoholen,
7) Hydroxydicarbonsäuren und Aminocarbonsäuren,
8) Hydroxydicarbonsäuren und Diaminen,
9) Dicarbonsäuren und Aminodiolen,
10) Dicarbonsäuren und Aminodicarbonsäuren

verwenden lassen. Besondere Bedeutung kann dabei Verbindungen zukommen, die aus aromatischen Polycarbonsäuren und/oder aromatischen primären Aminen aufgebaut sind. Die hierbei entstehenden Verbindungen, in denen die Imidringe unmittelbar an einen aromatischen Ring gebunden sind oder sogar unmittelbar daran teilnehmen, können für spezielle Verwendungszwecke der Harze, z.B. auf dem Gebiet der Elektroisolation, wichtig sein.

Die Erfindung betrifft auch ein Verfahren zur Herstellung von ungesättigten homo- und/oder copolymerisierbaren Polyestern aus mindestens teilweise mehrwertigen Alkoholen und mindestens teilweise mehrwertigen Carbonsäuren und gegebenenfalls Hydroxycarbonsäuren bzw. deren zur Esterbildung befähigten Derivaten unter Mitverwendung von Maleinsäure, Fumarsäure, Itaconsäure, Mesaconsäure und/oder Aconitsäure bzw. deren zur Esterbildung befähigten Derivaten, wobei als ein Teil der Alkohole hydroxyliertes Polybutadien in den Polyester einkondensiert wird, das dadurch gekennzeichnet ist, daß das hydroxylierte Polybutadien ein mittleres Molekulargewicht von 2400 bis 3000 und eine Hydroxyfunktionalität von 2,2 bis 2,4 hat.

Vorteilhaft werden 1 - 10 Mol-% hydroxyliertes Polybutadien, bezogen auf die Gesamtmenge an Alkoholen, verwendet. Vorteilhaft werden bei der Herstellung der Polyester stickstoffhaltige Verbindungen der allgemeinen Formeln

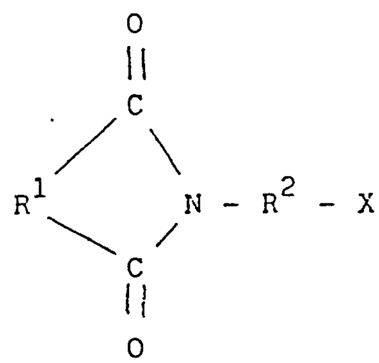

oder

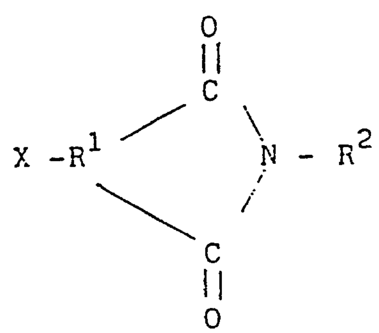

mit eingesetzt oder der Polyester wird mit den stickstoffhaltigen Verbindungen der obigen allgemeinen Formeln umgesetzt, in denen $R^1$ einen aliphatischen Rest, an dem die beiden zur Anhydridbildung befähigten Carboxylreste in 1,2- oder 1,3- Stellung stehen, $R^2$ einen Alkyl- oder Arylrest und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di-oder Triisocyanaten erfolgen kann.

Bei einer anderen Ausführungsform des erfindungsgemäßen Verfahrens werden vorteilhaft in den Polyester Reste einer Dicarbonsäure, eines Dialkohols und/oder einer Hydroxycarbonsäure mit jeweils wenigstens einer 5-gliedrigen cyclischen Imidgruppe einkondensiert.

Die Herstellung der ungesättigten Polyester erfolgt in bekannter Weise durch Schmelzkondensation. Hierbei

entstehen je nach Gehalt an hydroxyliertem Polybutadienharz in der Schmelze bei 200°C mehr oder weniger stark gallertartige ungesättigte Polyester, die gut in Styrol zu ungesättigten Polyesterharzen löslich sind. Diese zeigen auch bei sehr hohen Styrolgehalten eine stark ausgeprägte Strukturviskosität und Thixotropie.

Die Erfindung betrifft auch die Verwendung einer Lösung der erfindungsgemäßen Polyester in copolymerisierbaren Vinyl- und/oder Allylmonomeren, deren Anteil an Polyester 40 - 80 Gew.-% beträgt und die zusätzlich bekannte Härter und gegebenenfalls Beschleuniger und Verlaufsmittel enthält, zum Imprägnieren von elektrischen Maschinen oder Teilen hiervon sowie als Überzugsmasse für elektrische Bauelemente und Schaltungen. Die Polyesterharze eignen sich also sehr gut als Tränkharze im Elektromaschinenbau, zum Tränken von Statoren, Rotoren, Transformatoren und von sonstigen Spulen. Durch die Fließanomalien werden die Abtropfverluste sowohl vor der Härtung als auch die Abtropfverluste während der Aushärtung im Ofen stark reduziert. Dadurch wird die Ausfüllung der Hohlräume in den Wicklungen zwischen den Drähten gegenüber konventionellen ungesättigten Polyesterharztränkmitteln verbessert. Dies hat eine bessere Verfestigung der Wicklungen und eine bessere Värmeableitung aus den Wicklungen heraus zur Folge.

Durch die Verringerung der Abtropfverluste bei der Aushärtung im Ofen wird die Wirtschaftlichkeit verbessert, da weniger Material als Abtropfverlust im Ofen aushärtet und verworfen werden muß. Bei der Verwendung der ungesättigten Polyesterharze als Überzugsmasse für elektrische oder elektronische Bauelemente und Schaltungen können den Harzen übliche Füll- und/oder Verstärkungsstoffe, wie Quarzmehl, Kreide, Aluminiumhydroxid bzw. Asbest- oder Glasfasern beigemischt werden. Nach Zusatz geeigneter Fotoinitiatoren können diese Harze auch durch Ultraviolettbestrahlung gehärtet werden.

Im folgenden wird die Erfindung anhand von Ausführungsbeispielen näher erläutert.

**Beispiel 1**

1 Mol Trimellithsäureanhydrid, 5,8 Mol Neopentylglykol, 0,2 Mol endständig hydroxyliertes Polybutadien mit einem mittleren Molekulargewicht von 2800 und einer Hydroxyfunktionalität von 2,2 bis 2,4 6 Mol Maleinsäureanhydrid und 3 Mol des Reaktionsproduktes aus 1 Mol Tetrahydrophthalsäureanhydrid und 1 Mol Monoethanolamin werden mit 10 Gew.-% Xylol als Schleppmittel versetzt und in einem Kolben mit Rührer, Thermometer, Rückflußkühler und Stickstoffeinleitungsrohr geschmolzen und kondensiert. Die maximale Kondensationstemperatur beträgt 175°C. Es destilliert ein Gemisch aus Xylol und Wasser ab. Bei einer Säurezahl von 40 ist der Ansatz gummiartig. Die Temperatur wird jetzt auf 140°C gesenkt und nach Zugabe von 0,001 % Benzochinon wird der Ansatz langsam mit 30 % Styrol versetzt. Trotz der gummiartigen Konsistenz ist das Harz gut in Styrol löslich. Nach dem Abkühlen auf Raumtemperatur zeigt das Material eine Viskosität von ca. 6000 mPas (gemessen mit der Viskowaage, Kugel 2). Beim Stehenlassen geliert das Harz zu einer gelartigen Masse, die durch Rühren in den flüssigen Zustand überführt werden kann. Das Harz wird mit Styrol auf eine Viskosität von 200 mPas verdünnt und mit 1 % tert.-Butylperbenzoat als Härter versetzt. Mit dem so erhaltenen Tränkharz werden 7 Motorettenspulen, die aus 75 Windungen eines 1 mm starken Kupferdrahtes bestehen, imprägniert. Nach 15 minütigem Abtropfen bei Raumtemperatur werden die so imprägnierten Motorettenspulen 1 Stunde bei 120°C und 1 Stunde bei 140°C im Umluftofen gehärtet. Der dabei beobachtete Abtropfverlust im Ofen beträgt nur zwischen 3 und 5 %.

**Beispiel 2**

Aus 2,64 Mol Diethylenglykol, 7,63 Mol Tetrahydrophthalsäureanhydrid, 7,6 Mol Neopentylglykol, 0,4 Mol hydroxyliertem Polybutadien gemäß Beispiel 1 und 3,35 Mol Maleinsäureanhydrid wird nach der Verfahrensweise des Beispiels 1 ein linearer Polyester hergestellt. Bei einer Säurezahl von 44 wird die Kondensation abgebrochen und das Produkt in Styrol angelöst. Es wird mit Styrol auf eine Viskosität von 400 mPas bei 23°C eingestellt. Mit dem so erhaltenen Polyesterharz werden Spulen imprägniert und gedruckte Schaltungen im Tauchverfahren beschichtet. Es ergeben sich wiederum geringe Abtropfverluste und eine hervorragende Imprägnierung bzw. Beschichtung.

**Vergleichsbeispiel**

Aus 1 Mol Trimellithsäureanhydrid, 6 Mol Neopentylglykol, 6 Mol Maleinsäureanhydrid und 3 Mol des Reaktionsproduktes aus 1 Mol Tetrahydrophthalsäureanhydrid und 1 Mol Monoethanolamin wird nach der Verfahrensweise des Beiepiels 1 ein Polyesterharz hergestellt. Die Viskosität wird wie im Beispiel 1 mit Styrol eingestellt. Bei Anwendung dieses Polyesterharzes zum Imprägnieren von Motorettenspulen ergibt sich im Ofen ein Abtropfverlust von 11 bis 15 %.

**Patentansprüche**

1. Ungesättigte, homo- und/oder copolymerisierbare Polyester, hergestellt aus mindestens teilweise mehrwertigen Alkoholen und mindestens teilweise mehrwertigen Carbonsäuren und gegebenenfalls Hydroxycarbonsäuren bzw. deren zur Esterbildung befähigten Derivaten unter Mitverwendung von Maleinsäure, Fumarsäure, Itaconsäure, Mesaconsäure und/oder Aconitsäure bzw. deren zur Esterbildung befähigten Derivaten, wobei als ein Teil der Alkohole hydroxyliertes Polybutadien in den Polyester einkondensiert ist, dadurch gekennzeichnet, daß das hydroxylierte Polybutadien ein mittleres Molekulargewicht von 2 400 bis 3 000 und eine Hydroxyfunktionalität von 2,2 bis 2,4 hat.

2. Polyester nach Anspruch 1, dadurch gekennzeichnet, daß der Anteil an hydroxyliertem Polybutadien 1 bis 10 Mol-% bezogen auf die Gesamtmenge an Alkoholen beträgt.

3. Polyester nach Anspruch 1 oder 2, dadurch gekennzeichnet, daß die Polyester mit stickstoffhaltigen Verbindungen der allgemeinen Formeln

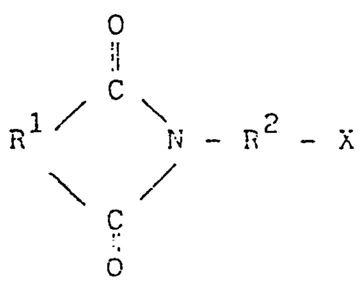

oder

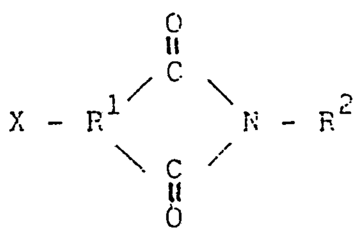

modifiziert sind, in denen $R^1$ einen aliphatischen Rest, an dem die beiden zur Anhydridbildung befähigten Carboxylreste in 1,2- oder 1,3-Stellung stehen, $R^2$ einen Alkyl- oder Arylrest und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di- oder Triisocyanaten erfolgt sein kann.

4. Polyester nach Anspruch 1 oder 2, dadurch gekennzeichnet, daß in die Polyester Reste einer Dicarbonsäure, eines Dialkohols und/oder einer Hydroxycarbonsäure mit jeweils wenigstens einer 5-gliedrigen cyclischen Imidgruppe einkondensiert sind.

5. Verfahren zur Herstellung von ungesättigten, homo- und /oder copolymerisierbaren Polyestern aus mindestens teilweise mehrwertigen Alkoholen und mindestens teilweise mehrwertigen Carbonsäuren und gegebenenfalls Hydroxycarbonsäuren bzw. deren zur Esterbildung befähigten Derivaten unter Mitverwendung von Maleinsäure, Fumarsäure, Itaconsäure, Mesaconsäure und/oder Aconitsäure bzw. deren zur Esterbildung befähigten Derivaten, wobei als ein Teil der Alkohole hydroxyliertes Polybutadien in den Polyester einkondensiert wird, dadurch gekennzeichnet, daß das hydroxylierte Polybutadien ein mittleres Molekulargewicht von 2 400 bis 3 000 und eine Hydroxyfunktionalität von 2,2 bis 2,4 hat.

6. Verfahren nach Anspruch 5, dadurch gekennzeichnet, daß 1 bis 10 Mol-% hydroxyliertes Polybutadien bezogen auf die Gesamtmenge an Alkoholen verwendet werden.

7. Verfahren nach Anspruch 5 oder 6, dadurch gekennzeichnet, daß bei der Herstellung der Polyester stickstoffhaltige Verbindungen der allgemeinen Formeln

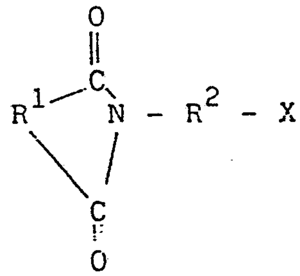

oder

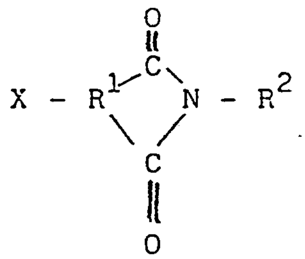

mit eingesetzt werden oder die Polyester mit den stickstoffhaltigen Verbindungen der obigen allgemeinen Formeln umgesetzt werden, in denen $R^1$ einen aliphatischen Rest, an dem die beiden zur Anhydridbildung befähigten Carboxylreste in 1,2- oder 1,3-Stellung stehen, $R^2$ einen Alkyl- oder Arylrest und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di- oder Triisocyanaten erfolgen kann.

8. Verfahren nach Anspruch 5 oder 6, dadurch gekennzeichnet, daß in den Polyester Reste einer Dicarbonsäure, eines Dialkohols und/oder einer Hydroxycarbonsäure mit jeweils wenigstens einer 5-gliedrigen cyclischen Imidgruppe einkondensiert werden.

9. Verwendung einer Lösung der Polyester nach Anspruch 1 bis 4 in copolymerisierbaren Vinyl- und/oder Allylmonomeren, deren Anteil an Polyester 40 - 80 Gew.-% beträgt und die zusätzlich bekannte Härter und gegebenenfalls Beschleuniger und Verlaufmittel enthält, zum Imprägnieren von elektrischen Maschinen oder Teilen hiervon.

10. Verwendung einer Lösung der Polyester nach Anspruch 1 bis 4, in copolymerisierbaren Vinyl- und/oder Allylmonomeren, deren Anteil an Polyester 40 - 80 Gew.-% beträgt und die zusätzlich bekannte Härter und gegebenenfalls Beschleuniger und Verlaufsmittel enthält, als Überzugsmasse für elektrische und/oder elektronische Bauelemente und Schaltungen.

**Claims**

1. Unsaturated, homo- and/or copolymerisable polyesters, produced from at least partially polyhydric alcohols and at least partially polybasic carboxylic acids and optionally hydroxycarboxylic acids or their derivatives capable of forming esters with the use also of maleic acid, fumaric acid, itaconic acid, mesaconic acid and/or aconitic acid or their derivatives capable of forming esters, hydroxylated polybutadiene being condensed in the polyesters as part of the alcohols, characterized in that the hydroxylated polybutadiene has an average molecular weight of from 2400 to 3000 and a hydroxy functionality of from 2.2 to 2.4.

2. Polyesters according to claim 1, characterized in that the proportion of hydroxylated polybutadiene is 1 to 10 mol % based on the total amount of alcohols.

3. Polyesters according to claim 1 or claim 2, characterized in that the polyesters are modified with nitrogen-containing compounds of the general formulae

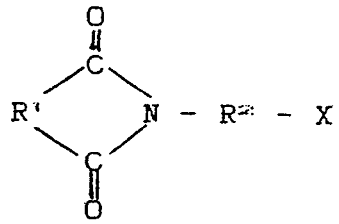

or

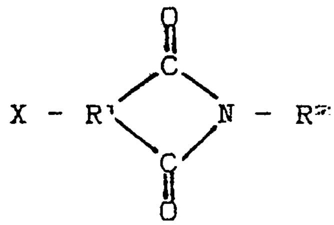

in which $R^1$ is an aliphatic group in relation to which the two carboxyl groups capable of forming anhydrides are in the 1,2- or 1,3-position, $R^2$ is an alkyl or aryl group and X is an OH or a $CO_2H$ group, wherein optionally the bonds of the hydroxyl groups of the nitrogen-containing compounds to the hydroxyl groups of the unsaturated polyester can be effected with di- or triisocyanates.

4. Polyesters according to claim 1 or claim 2, characterized in that groups of a dicarboxylic acid, a dialcohol and/or a hydroxycarboxylic acid, each with at least one 5-membered, cyclic imide group, are condensed into the polyesters.

5. A process for producing unsaturated homo- and/or copolymerisable polyesters from at least partially polyhydric alcohols and at least partially polybasic carboxylic acids and optionally hydroxycarboxylic acids or their derivatives capable of forming esters with the use also of maleic acid, fumaric acid, itaconic acid, mesaconic acid and/or aconitic acid or their derivatives capable of forming esters, hydroxylated polybutadiene being condensed in the polyesters as part of the alcohols, characterized in that the hydroxylated polybutadiene has an average molecular weight of from 2400 to 3000 and a hydroxy functionality of from 2.2 to 2.4.

6. A process according to claim 5, characterized in that 1 to 10 mol % hydroxylated polybutadiene is used, based on the total amount of alcohols.

7. A process according to claim 5 or claim 6, characterized in that in the production of the polyesters nitrogen-containing compounds of the general formulae

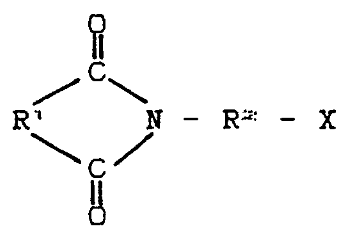

or

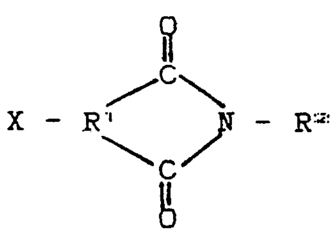

are also inserted or the polyesters are reacted with the nitrogen-containing compounds of the above general formulae, in which $R^1$ is an aliphatic group in relation to which the two carboxyl groups capable of forming anhydrides are in the 1,2- or 1,3-position, $R^2$ is an alkyl or aryl group and X is an OH or $CO_2H$ group, wherein optionally the bonds of the hydroxyl groups of the nitrogen-containing compounds to the hydroxyl groups of the unsaturated polyester can be effected with di- or triisocyanates.

8. A process according to claim 5 or claim 6, characterized in that groups of a dicarboxylic acid, a dialcohol and/or a hydroxycarboxylic acid, each with at least one 5-membered, cyclic imide group, are condensed in the polyesters.

9. The use of a solution of the polyesters according to claims 1 to 4 in copolymerisable vinyl and/or allyl monomers to impregnate electrical machines or parts thereof, the solution having a proportion of polyesters of from 40 to 80 % by weight and additionally containing known hardeners and optionally accelerators and flow-control agents.

10. The use of a solution of the polyesters according to claims 1 to 4 in copolymerisable vinyl and/or allyl monomers as a coating material for electrical and/or electronic components and circuits, the solution having a proportion of polyesters of from 40 to 80 % by weight and additionally containing known hardeners and optionally accelerators and flow-control agents.

**Revendications**

1 - Polyesters insaturés, homo- et/ou copolymérisables, préparés à partir d'alcools au moins partiellement polyvalents et d'acides carboxyliques au moins partiellement polyvalents, et, le cas échéant, d'acides hydroxycarboxyliques, ou de leurs dérivés aptes à former des esters, avec co-utilisation d'acide maléique, d'acide fumarique, d'acide itaconique, d'acide mésaconique et/ou d'acide aconitique ou de leurs dérivés aptes à former des esters, du polybutadiène hydroxylé formant une partie des alcools étant introduit par condensation dans le polyester, caractérisés par le fait que le polybutadiène hydroxylé présente un poids moléculaire moyen allant de 2400 à 3000 et une fonctionnalité hydroxyle allant de 2,2 à 2,4.

2 - Polyesters selon la revendication 1, caractérisés par le fait que la fraction en polybutadiène hydroxylé s'élève à 1 à 10% en mole, par rapport à la quantité totale en alcools.

3 - Polyesters selon la revendication 1 ou 2, caractérisés par le fait que les polyesters sont modifiés par des composés renfermant de l'azote, représentés par les formules générales:

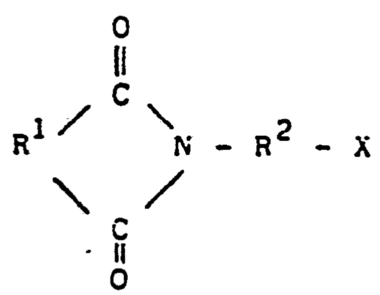

ou

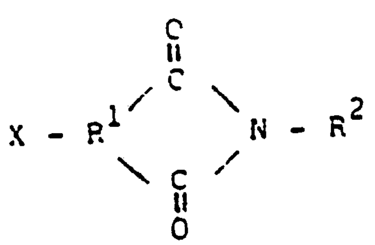

formules dans lesquelles:

- les $R^1$ signifient un reste aliphatique, sur lequel les deux restes carboxyle aptes à former l'anhydride se trouvent en position 1,2 ou 1,3;

- les $R^2$ signifient un reste alkyle ou un reste aryle; et

- les X signifient un reste OH- ou un reste $CO_2H$-, le cas échéant, la liaison des groupes hydroxyle des composés renfermant de l'azote aux groupes hydroxyle du polyester insaturé ayant pu avoir lieu avec des di- ou triisocyanates.

4 - Polyesters selon la revendication 1 ou 2, caractérisés par le fait que, dans les polyesters, des restes d'un acide dicarboxylique, d'un dialcool et/ou d'un acide hydroxycarboxylique sont introduits par condensation avec, à chaque fois, au moins un groupe imide cyclique à 5 chaînons.

5 - Procédé pour la préparation de polyesters insaturés, homo- et/ou copolymérisables, à partir d'alcools au moins partiellement polyvalents et d'acides carboxyliques au moins partiellement polyvalents, et, le cas échéant, d'acides hydroxycarboxyliques, ou leurs dérivés aptes à former des esters, avec co-utilisation d'acide maléique, d'acide fumarique, d'acide itaconique, d'acide mésaconique, et/ou d'acide aconitique ou de leurs dérivés aptes à former des esters, du polybutadiène hydroxylé formant une partie des alcools étant introduit par condensation dans les polyesters, caractérisé par le fait que le polybutadiène hydroxylé présente un poids moléculaire moyen allant de 2400 à 3000 et une fonctionnalité hydroxyle allant de 2,2 à 2,4.

6 - Procédé selon la revendications 5, caractérisé par le fait que l'on utilise de 1 à 10% en mole de polybutadiène hydroxylé, par rapport à la quantité totale en alcools.

7 - Procédé selon la revendication 5 ou 6, caractérisé par le fait que, dans la préparation des polyesters, on utilise conjointement des composés renfermant de l'azote représentés par les formules générales:

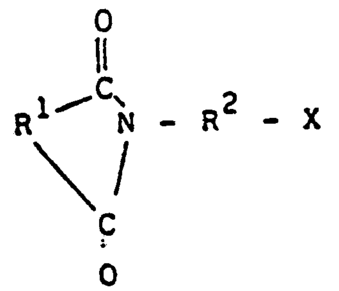

ou

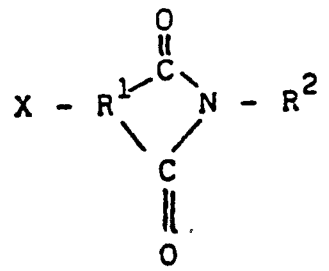

ou on fait réagir les polyesters avec des composés renfermant de l'azote, représentés par les formules générales ci-dessus,

formules dans lesquelles:

- les $R^1$ représentent un reste aliphatique, sur lequel les deux restes carboxyle aptes à former l'anhydride se trouvent en position 1,2 ou 1,3;

- les $R^2$ signifient un reste alkyle ou un reste aryle; et

- les X signifient un reste OH- ou un reste $CO_2H$-, le cas échéant, la liaison des groupes hydroxyle des composés renfermant de l'azote aux groupes hydroxyle du polyester insaturé pouvant avoir lieu avec des di- ou triisocyanates.

8 - Procédé selon la revendication 5 ou 6, caractérisé par le fait que, dans les polyesters, des restes d'un acide dicarboxylique, d'un dialcool et/ou d'un acide hydroxycarboxylique sont introduits par condensation avec, à chaque fois, au moins un groupe imide cyclique à 5 chaînons.

9 - Utilisation d'une solution des polyesters selon l'une des revendications 1 à 4, dans des monomères vinyliques et/ou allyliques copolymérisables, dont la fraction en polyesters s'élève à 40-80% en poids et qui renferme additionnellement des agents de durcissement connus et, le cas échéant, des agents accélérateurs et agents d'écoulement connus, pour l'imprégnation de machines électriques ou de parties de ces dernières.

10 - Utilisation d'une solution des polyesters selon l'une des revendications 1 à 4, dans des monomères vinyliques et/ou allyliques copolymérisables, dont la fraction en polyesters s'élève à 40-80% en poids et qui renferme additionnellement des agents de durcissement connus et, le cas échéant, des agents accélérateurs et des agents d'écoulement connus, comme masse de revêtement pour des éléments de structure et des connexions électriques et/ou électroniques.